# EUROPÄISCHE PATENTSCHRIFT

(11) **EP 0 494 726 B1**
(45) Veröffentlichungstag und Bekanntmachung des Hinweises auf die Patenterteilung: **09.08.1995**
(21) Anmeldenummer: 92250006.1
(22) Anmeldetag: 08.01.1992
(51) Int. Cl.: B60R 17/02, F16N 7/38

(54) **Zentralschmieraggregat**
Central lubricating unit
Unité centralisée de lubrification

(30) Priorität: 10.01.1991 DE 4100724
(43) Veröffentlichungstag der Anmeldung: 15.07.1992
(73) Patentinhaber: Willy Vogel AG, D-12277 Berlin (DE)
(72) Erfinder: Meuer, Johannes, Dipl.-Ing., W-1000 Berlin 22 (DE); Todtenhaupt, Dieter, Ing. (Grad.), W-1000 Berlin 31 (DE); Schönherr, Dieter, Ing. (Grad.), W-1000 Berlin 65 (DE)
(74) Vertreter: Böning, Manfred, Dr.-Ing.

(56) Entgegenhaltungen:
- DE-A- 1 029 201
- DE-A- 2 150 070
- US-A- 2 771 844
- US-A- 2 960 112
- US-A- 3 034 288

## Beschreibung

Die Erfindung betrifft ein Zentralschmieraggregat für Fahrzeuge mit einer von einer Zahnradpumpe gebildeten Schmierstoffpumpe, einem Antriebsmotor für die Schmierstoffpumpe und einem zwischen der Schmierstoffpumpe und dem Antriebsmotor angeordneten, mit Schmierstoffkanälen versehenen Verbindungsstück.

Aus der gattungsbildenden DE-B-1 184 659 ist ein Zentralschmieraggregat der vorstehenden Art bekannt, bei dem eine in der Nähe des Bodens eines mit Fließfett gefüllten Schmierstoffbehälters angeordnete Zahnradpumpe über ein als Tauchrohr ausgebildetes Verbindungsstück und ein sich hieran anschließendes Zwischenstück mit ihrem Antriebsmotor verbunden ist. Das Verbindungsstück weist einen Schmierstoffkanal auf, der die Zahnradpumpe mit einem zu einem Schmierstoffauslaß führenden Kanal verbindet und dem ein Entlastungsventil zugeordnet ist. Die Welle des treibenden Pumpenzahnrades ist über eine Zwischenwelle mit der Welle des Antriebsmotors verbunden. Das bekannte Aggregat beansprucht vergleichsweise viel Platz und setzt einen Betrieb der Schmierstoffpumpe als Tauchpumpe voraus.

Bekannt ist außerdem, und zwar aus US-A-2 771 844, eine als Schmierstoffpumpe nutzbare Zahnradpumpe, bei der Wellenstümpfe der Zahnräder in einem eine der Deckplatten der Pumpe bildenden, mit Kanälen versehenen Ventilblock gelagert sind, dessen Ventilorgan von der mit einer umlaufenden Schrägnut versehenen Welle eines der Zahnräder des Zahnradpaars der Pumpe gebildet wird. Diese Pumpe eignet sich jedoch nicht für den Einsatz in Verbindung mit einer Kolbenverteiler aufweisenden Zentralschmieranlage, da im Falle des Abschaltens der Pumpe keine Gewähr für eine Druckentlastung in den zu den Kolbenverteilern führenden Leitungen gegeben ist.

Der Erfindung liegt die Aufgabe zugrunde, ein Zentralschmieraggregat der in Betracht gezogenen Gattung zu schaffen, bei dem wie im Falle der zweiten bekannten Pumpe eine der Deckplatten der Pumpe ebenfalls von einem Ventilblock gebildet wird und bei dem der Platzbedarf und der Herstellungsaufwand folglich gegenüber der gattungsgemäßen Pumpe reduziert ist. Diese Aufgabe wird erfindungsgemäß dadurch gelöst, daß das Verbindungsstück einen ein kombiniertes Druckentlastungs- und Druckbegrenzungsventil aufweisenden Ventilblock bildet, der an sich gegenüberliegenden Seitenflächen mit einem Schmierstoffeinlaß und einem mit Kolbenverteilern in Verbindung stehenden Schmierstoffauslaß versehen ist und in dem Wellenstümpfe der Zahnräder der Schmierstoffpumpe gelagert sind.

Das erfindungsgemäße Zentralschmieraggregat bietet den Vorteil, daß sein Verbindungsstück nicht nur sämtliche zwischen einem Schmierstoffeinlaß und einem Schmierstoffauslaß angeordneten Schmierstoffkanäle aufnehmen kann, sondern daß es auch einen Bestandteil der Schmierstoffpumpe bildet und so eine kompakte Bauweise des Aggregates begünstigt.

Weitere Einzelheiten und Merkmale der Erfindung ergeben sich aus den Unteransprüchen und der nachstehenden Beschreibung eines in der beigefügten Zeichnung dargestellten bevorzugten Ausführungsbeispieles. Es zeigen:
- Fig. 1: teilweise im Schnitt die Seitenansicht eines Zentralschmieraggregates,
- Fig. 2: ebenfalls teilweise im Schnitt eine Draufsicht auf die Schmierstoffpumpe und die sie mit ihrem Antriebsmotor verbindenden Teile des Zentralschmieraggregates gemäß Fig. 1 und
- Fig. 3: einen Schnitt durch das als Ventilblock ausgebildete Verbindungsstück zwischen der Schmierstoffpumpe und ihrem Antriebsmotor.

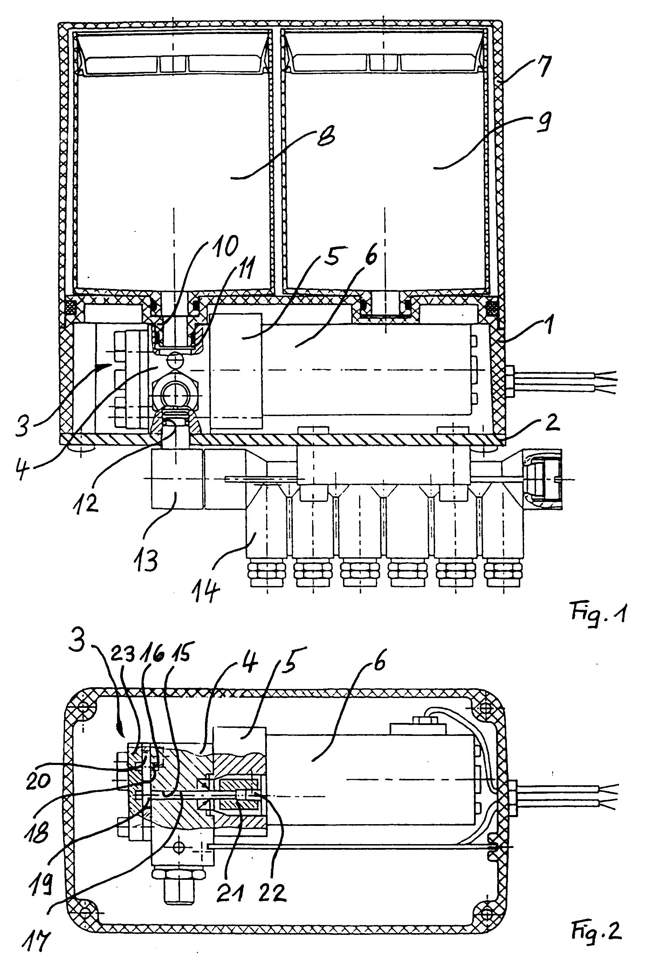

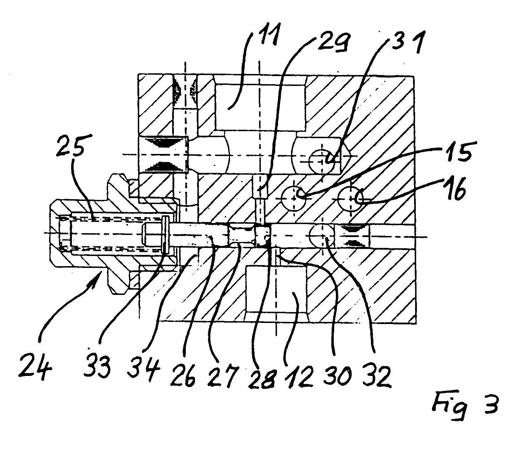

In Figur 1 ist 1 ein durch einen Deckel 2 verschlossenes Gehäuse, in dem eine als Zahnradpumpe ausgebildete Schmierstoffpumpe 3 und der über ein Verbindungsstück 4 und ein Zwischenstück 5 mit dieser verbundene Antriebsmotor 6 eines Zentralschmieraggregates angeordnet sind. Oberhalb des Gehäuses 1 sind unter einer Haube 7 zwei mit Fließfett gefüllte Schmierstoffkartuschen 8 und 9 untergebracht, von denen die eine über einen Verbindungsstutzen 10 mit dem Einlaß 11 des als Ventilblock ausgebildeten Verbindungsstückes 4 in Verbindung steht, während die andere eine Reserve-Kartusche bildet. An den Auslaß 12 des Verbindungsstückes 4 ist über ein Winkelstück 13 eine Kolbenverteilergruppe 14 mit sechs Kolbenverteilern angeschlossen.

Das Verbindungsstück 4 ist mit Bohrungen 15 und 16 zur Aufnahme von Wellenstümpfen 17,18 der Zahnräder 19,20 der Schmierstoffpumpe 3 versehen. Der Wellenstumpf 17 ragt durch das Verbindungsstück 4 hindurch und ist im Zwischenstück 5 durch ein Kupplungselement 21 mit der Welle 22 des Antriebsmotors 6 verbunden.

Die Zahnräder 19,20 sind zwischen einer Deckplatte 23 und dem Verbindungsstück 4 angeordnet, das folglich die Funktion der bei Zahnradpumpen sonst üblichen zweiten Deckplatte übernimmt.

Im Verbindungsstück ist neben diversen Schmierstoffkanälen ein kombiniertes Druckentlastungs- und Druckbegrenzungsventil 24 angeordnet, das einen gegen die Wirkung einer Rückstellfeder 25 hin- und herverschiebbaren Kolben 26 mit einer Ringnut 27 aufweist. Die Ringnut 27 trennt einen Kolbenabschnitt 28 vom Rest des Kolbens 26. Der Kolbenabschnitt 28 verschließt in Figur 3 einen Stichkanal 29, der im druckentlasteten Zustand des Systems den Schmierstoffeinlaß 11 über die Ringnut 27 und einen zum Schmierstoffauslaß 12 führenden Stichkanal 30 verbindet. Figur 3 zeigt die Lage des Kolbens 26 während der Schmierstoffversorgung der Kolbenverteilergruppe. In dieser Phase saugt die Schmierstoffpumpe 3 über einen Kanal 31 Schmierstoff aus der Schmierstoffkartusche 8 an und fördert ihn über einen Kanal 32 zum Schmierstoffauslaß 12. Sind alle Kolbenverteiler versorgt und läuft die Pumpe noch weiter, so verlagert sich der Kolbenabschnitt 28 in Figur 3 nach links und gibt den Stichkanal 29 frei, so daß ein weiterer Druckanstieg verhindert wird. Sobald die Schmierstoffpumpe 3 abgeschaltet ist, drückt die Rückstellfeder den Kolben 26 in seine Ursprungslage zurück, in der er mit einem Bund 33 gegen die Fläche 34 des Verbindungsstückes 4 anliegt. Die Kolbenverteiler fördern nunmehr in bekannter Weise im Rahmen eines sogenannten Nachschmiervorganges den in ihnen gespeicherten Schmierstoff zu der jeweils einem Kolbenverteiler zugeordneten Schmierstelle.

## Patentansprüche

1. Zentralschmieraggregat für Fahrzeuge mit einer von einer Zahnradpumpe gebildeten Schmierstoffpumpe (3), einem Antriebsmotor (6) für die Schmierstoffpumpe (3) und einem zwischen der Schmierstoffpumpe (3) und dem Antriebsmotor (6) angeordneten, mit Schmierstoffkanälen versehenen Verbindungsstück (4), **dadurch gekennzeichnet**, daß das Verbindungsstück (4) einen ein kombiniertes Druckentlastungs- und Druckbegrenzungsventil (24) aufweisenden Ventilblock bildet, der an sich gegenüberliegenden Seitenflächen mit einem Schmierstoffeinlaß (11) und einem mit Kolbenverteilern (14) in Verbindung stehenden Schmierstoffauslaß (12) versehen ist, und daß in dem Verbindungsstück Wellenstümpfe (17,18) der Zahnräder (19,20) der Schmierstoffpumpe (3) gelagert sind.

2. Zentralschmieraggregat nach Anspruch 1, **dadurch gekennzeichnet**, daß der Schmierstoffeinlaß (11) und der Schmierstoffauslaß (12) einerseits über durch einen Kolben (26) des Druckbegrenzungs- und Druckentlastungsventiles (24) gegeneinander absperrbare Stichkanäle (29,30) und andererseits über den Saugkanal (31) und den Druckkanal (32) der Schmierstoffpumpe (3) in Verbindung stehen.

3. Zentralschmieraggregat nach Anspruch 1 oder 2, **dadurch gekennzeichnet**, daß das Verbindungsstück (4) über ein Zwischenstück (5) mit dem Antriebsmotor (6) verbunden ist.

4. Zentralschmieraggregat nach Anspruch 3, **dadurch gekennzeichnet**, daß der dem anzutreibenden Zahnrad (19) der Schmierstoffpumpe (3) zugeordnete Wellenstumpf (17) im Zwischenstück (5) durch ein Kupplungselement (21) mit der Welle (22) des Antriebsmotors (6) verbunden ist.

## Claims

1. A centralized lubrication system for vehicles with a lubricant pump (3) formed by a gear pump, a drive motor (6) for the lubricant pump (3) and a connection piece (4) arranged between the lubricant pump (3) and the drive motor (6) and provided with lubricant ducts, **characterised in that** the connection piece (4) forms a valve block with a combined pressure relief and pressure limiting valve (24), the said valve block being provided on opposite side surfaces with a lubricant inlet (11) and a lubricant outlet (12) connected to piston distributors (14), and that the shaft butts (17, 18) of the gears (19, 20) of the lubricant pump (3) are mounted in the connection piece.

2. A centralized lubrication system according to claim 1, **characterised in that** the lubricant inlet (11) and the lubricant outlet (12) are connected on the one hand through branch ducts (29, 30) which can be shut off relative to each other through a piston (26) of the pressure limiting and pressure relief valve (24) and on the other hand through the induction port (31) and the pressure duct (32) of the lubricant pump (3).

3. A centralized lubrication system according to claim 1 or claim 2, **characterised in that** the connection piece (4) is connected to the drive motor (6) via an intermediate piece (5).

4. A centralized lubrication system according to claim 3, **characterised in that** shaft butt (17) assigned to the gear (19) of the lubricant pump (3) to be driven is connected within the intermediate piece (5) to the shaft (22) of the drive motor (6) by means of a connection piece element (21).

## Revendications

1. Unité centralisée de lubrification pour des véhicules, avec une pompe de lubrifiant (3) formée par une pompe à engrenages, un moteur d'entraînement (6) pour la pompe de lubrifiant (3), et un élément de liaison (4) disposé entre la pompe de lubrifiant (3) et le moteur d'entraînement (6) et pourvu de canaux de lubrifiant, **caractérisée** en ce que l'élément de jonction (4) forme un bloc de soupape, qui présente une soupape combinée (24) de décharge et de limitation de pression et qui est doté, sur des faces latérales en vis-à-vis, d'une admission de lubrifiant (11) et d'une sortie de lubrifiant (12) communiquant avec des distributeurs à piston (14), et en ce que des bouts d'arbre (17, 18) des roues d'engrenage (19, 20) de la pompe de lubrifiant (3) sont montés dans l'élément de liaison (4).

2. Unité centralisée de lubrification selon la revendication 1, **caractérisée** en ce que l'admission de lubrifiant (11) et la sortie de lubrifiant (12) communiquent entre elles, d'une part par des perçages (29, 30) pouvant être mutuellement isolés par un piston (26) de la soupape combinée (24) de décharge et de limitation de pression, et d'autre part par l'intermédiaire du canal d'aspiration (31) et du canal de refoulement (32) de la pompe de lubrifiant (3).

3. Unité centralisée de lubrification selon la revendication 1 ou 2, **caractérisée** en ce que l'élément de liaison (4) est reliée au moteur d'entraînement (6) au moyen d'un élément intermédiaire (5).

4. Unité centralisée de lubrification selon la revendication 3, **caractérisée** en ce que le bout d'arbre (17), qui est associé à la roue d'engrenage menée (19) de la pompe de lubrifiant (3), est relié, dans l'élément intermédiaire (5), par un élément d'accouplement (21) à l'arbre (22) du moteur d'entraînement (6).
